# EUROPEAN PATENT APPLICATION

(11) **EP 4 462 204 A1**
(43) Date of publication of application: **13.11.2024**
(21) Application number: 23172592.0
(22) Date of filing: 10.05.2023
(51) Int. Cl.: G05B 19/4069

(54) **SYSTEM AND METHOD FOR PERFORMING VIRTUAL ORCHESTRATION FOR MANAGING AND USING A MACHINING EQUIPMENT**

(71) Applicant: Siemens Aktiengesellschaft, 80333 München (DE)
(72) Inventor: B R, Chethan Ravi, 577134 Chickmagalur District, Karnataka (IN); ROUX, Armin, 91052 Erlangen (DE); CHAITANYA, O.V.R.Krishna, 560067 Bangalore, Karnataka (IN); RAMANATH, Vinay, 560070 Bengaluru, Karnataka (IN); SINGAM, Srividhya, 518360 Kurnool District, Andhra Pradesh (IN); CARDOZ, Basil, 403110 Goa (IN)
(74) Representative: Isarpatent

(57) **Abstract**

A system (100) and method for performing virtual orchestration for managing and using a machining equipment (105) is disclosed herein. The method comprises receiving, by a processing unit, a request from a user interface (165), for performing virtual orchestration of the machining equipment (105). Further, at least one virtual replica of a spindle bearing assembly suitable for the machining equipment (105), is selected from a plurality of virtual replicas stored in a digital library within a virtual layer, upon receiving the request. Further, a digital replica of at least the spindle bearing assembly suitable for the machining equipment (105) within the virtual layer by updating the selected virtual replica based on the input data. Based on execution of at least one simulation using the configured digital replica, one or more workflow parameters associated with the spindle bearing assembly are computed. Further, at least one action is performed based on the one or more workflow parameters to generate an outcome.

## Description

The present invention relates to machining equipment, and more particularly relates to a system and a method for performing virtual orchestration for managing and using a machining equipment.

Traditionally, a consumer purchases a machining equipment from an Original Equipment Manufacturer (OEM) by paying a price upfront. Upon purchase, the consumer assumes responsibility for the whole lifespan of the machining equipment. Consequently, the consumer in addition keeps paying for repairs, maintenance and spare parts over a lifespan of the machining equipment. As an alternative, the consumer may be allowed to take the machining equipment based on a free-care package from the OEM, wherein the consumer may pay a usage fee associated with the machining equipment based on attributes such as performance, availability, uptime etc. Such a mechanism offer flexibility to the consumer to make the payment based on a nature of usage of the machining equipment.

Therefore, there is a need for a mechanism that predicts such attributes associated with a machining equipment for enabling charging of the consumer based on usage of the machining equipment.

Disclosed herein is a system and a method for performing virtual orchestration for managing and using a machining equipment. The method includes receiving, by a processing unit, a request for performing virtual orchestration of a machining equipment, from a user interface. The request comprises input data indicative of one or more requirements associated with performing the virtual orchestration of the machining equipment.

The method further includes selecting at least one virtual replica, from a plurality of virtual replicas stored in a digital library within a virtual layer, upon receiving the request. Each of the virtual replicas correspond to a static mathematical representation of a spindle bearing assembly suitable for the machining equipment. In an embodiment, selecting the at least one virtual replica from the plurality of virtual replicas includes identifying, from the input data, metadata indicative of the one or more requirements for performing virtual orchestration within the virtual layer. Further, a search logic is generated based on the metadata identified. Further, a search is performed in the digital library comprising the plurality of virtual replicas, based on the generated search logic, for selecting the virtual replica. In an embodiment, wherein the virtual replica comprises an integrated dynamic-thermal model, comprising at least a one-dimensional dynamic model operably coupled to a one-dimensional thermal model of the spindle bearing assembly. In a further embodiment, the virtual replica further comprises a motion simulation model operably coupled to the integrated dynamic-thermal model, wherein the at least one motion simulation model is configured for dynamically computing con-tact forces in the spindle bearing assembly.

The method further includes configuring a digital replica of at least the spindle bearing assembly suitable for the machining equipment within the virtual layer, by updating the selected virtual replica based on the input data. The digital replica is a dynamic mathematical representation of the spindle bearing assembly corresponding to the selected virtual replicas in the digital library.

The method further includes computing one or more workflow parameters associated with the spindle bearing assembly based on execution of at least one simulation using the configured digital replica. In an embodiment, computing the one or more workflow parameters includes executing one or more simulation instances of the configured digital replica in a simulation environment to generate one or more simulation results indicative of the one or more workflow parameters.

The method further includes performing at least one action based on the one or more workflow parameters to generate an outcome. In an embodiment, the outcome of performing the at least one action is an optimal configuration for the spindle bearing assembly, wherein performing the at least one action includes determining whether the one or more workflow parameters meet a predetermined criterion. If at least one of the workflow parameters fail to meet the predetermined criterion, the one or more other virtual replicas are selected from the digital library. Further, the one or more workflow parameters are recomputed based on digital replicas configured based on each of the one or more other virtual replicas, until the one or more workflow parameters meet the predetermined criterion. In an embodiment, if the one or more workflow parameters meet the predetermined criterion, a configuration of the spindle bearing assembly corresponding to the selected virtual replica is identified.

In another embodiment, the outcome of performing the at least one action is an optimal operating condition for the spindle bearing assembly, wherein the optimal operating condition is associated with one of autonomous operation and manual operation of the machining equipment, and wherein performing the at least one action includes using an optimization algorithm to compute the optimal operation condition for the spindle bearing assembly based on the one or more workflow parameters.

In yet another embodiment, the outcome of performing the at least one action is deviation between at least one of the workflow parameters and a corresponding measured parameter, and wherein performing the at least one action includes computing the deviation between the at least one of the workflow parameters and the corresponding measured parameter.

In a further embodiment, the outcome of performing the at least one action is a control parameter for controlling an operation of the machining equipment, and wherein performing the at least one action includes calculating the control parameter based on the computed deviation if the deviation is greater than a predefined value. The calculated control parameter is adapted to reduce the deviation between the at least one workflow parameter and the measured parameter when applied to the machining equipment. In an embodiment, the deviation is associated with a production time of the machining equipment.

The method further includes executing a secure wallet that is adapted based on an outcome of performing the at least one action. The secure wallet is a piece of code executable on network for controlling a transaction between a consumer node and a manufacturer node, wherein the consumer node is a node associated with a consumer of the machining equipment, and the manufacturer node is associated with a manufacturer of the machining equipment. In an embodiment, executing the secure wallet configured based on the outcome, further includes identifying a template based on the one or more requirements received with the request. Further, the secure wallet is configured using the selected template based on the outcome of performing the at least one action for virtual orchestration within the virtual layer of the machining equipment.

In an embodiment, the method further includes generating a notification indicative of the outcome of performing the at least one action on a user interface.

Disclosed herein is also a computer system arranged and configured to execute the steps of the computer-implemented method according to any one of the preceding method steps.

Disclosed herein is also a computer-readable medium, on which program code sections of a computer program are saved, the program code sections being loadable into and/or executable by a processing unit which performs the method as described above when the program code sections are executed.

The realization of the invention by a computer program product and/or a non-transitory computer-readable storage medium has the advantage that computer systems can be easily adopted by installing computer program to work as proposed by the present invention.

The computer program product can be, for example, a computer program or comprise another element apart from the computer program. This other element can be hardware, for example a memory device, on which the computer program is stored, a hardware key for using the computer program and the like, and/or software, for example a documentation or a software key for using the computer program.

The above-mentioned attributes, features, and advantages of this invention and the manner of achieving them, will become more apparent and understandable (clear) with the following description of embodiments of the invention in conjunction with the corresponding drawings. The illustrated embodiments are intended to illustrate, but not limit the invention.

The present invention is further described hereinafter with reference to illustrated embodiments shown in the accompanying drawings, in which:
- FIG 1A: illustrates a block-diagram of a system for performing virtual orchestration for managing and using at least one machining equipment, in accordance with an embodiment of the present invention;
- FIG 1B: illustrates a block-diagram of an apparatus for performing virtual orchestration for managing and using the at least one machining equipment, in accordance with an embodiment of the present invention;
- FIG 2: illustrates a spindle bearing assembly associated with a machining equipment, in accordance with an embodiment of the present invention;
- FIGS 3A-B: illustrates a block diagram of a digital replica of a spindle bearing assembly associated with a machining equipment, in accordance with an embodiment of the present invention;
- FIG 4: depicts a flowchart of an exemplary method for performing virtual orchestration for managing and using a machining equipment, in accordance with an embodiment of the present invention;
- FIG 5: illustrates an exemplary method of computing and maintaining optimal operating condition for the spindle bearing assembly, in accordance with an embodiment of the present invention; and
- FIG 6: shows a flowchart of an exemplary method for predicting production time associated with a machining equipment, in accordance with an embodiment of the present invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth to provide a thorough understanding of one or more embodiments. It may be evident that such embodiments may be practiced without these specific details.

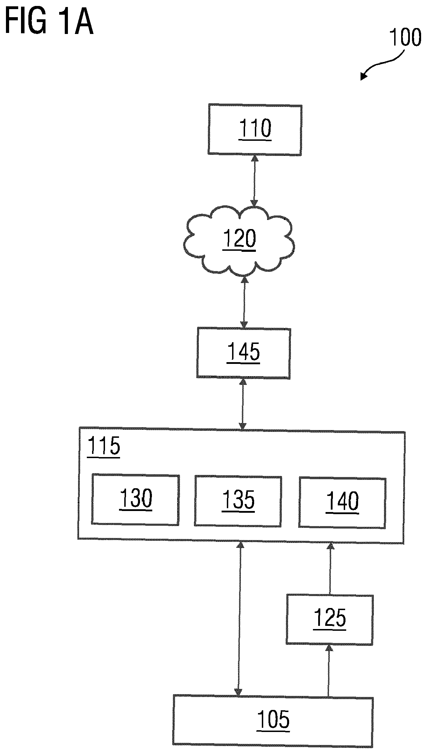

FIG 1A illustrates a block-diagram of a system 100 for performing virtual orchestration for managing and using at least one machining equipment 105, in accordance with an embodiment of the present invention. More specifically, system 100 managing utilization of the machining equipment 105. The system 100 comprises an apparatus 110 communicatively coupled to a controller 115 associated with the machining equipment 105, through a network 120. In the present embodiment, the apparatus 110 is an edge computing device. It must be understood by a person skilled in the art that the apparatus 110 may be communicatively coupled to a plurality of controllers, in a similar manner. It must be understood that each controller among the plurality of controllers may be associated with one or more machining equipment. It may be understood by a person skilled in the art that the apparatus 110 may combine functionalities of the edge computing device and the controller 115. In an alternate embodiment, the apparatus 110 is a cloud platform. For example, the cloud platform may be communicatively coupled to the controller 115 via an edge computing device.

The controller 115 may enable an operator of the machining equipment 105 to define operating conditions for performing a machining operation. As may be understood by a person skilled in the art, the operating conditions may be defined by an operator before starting a machining operation or during operation of the machining equipment 105. For example, the operating conditions correspond to type of machining operation, type of cutting tool, tool settings, Automatic Tool Changer settings, feed rate, cutting speed, NC code and material testing data associated with a workpiece mounted on the machining equipment 105.

The controller 115 may be further communicatively coupled to one or more sensing units 125 associated with the machining equipment 105. The one or more sensing units 125 include least one sensor such as an accelerometer, rotary encoder, dynamometer, current transformer, thermistor, and the like, configured to measure operational parameters associated with the machining equipment 105. The accelerometer is configured for measuring vibrations at one or more locations on the machining equipment 105. In the present embodiment, the accelerometer is installed on a structure of the machining equipment 105. For example, the accelerometer may be attached to a bed or column of the machining equipment 105. The current transformer is configured for measuring current associated with a servo mechanism that controls motion of the spindle of the machining equipment 105. The thermistor is configured for measuring temperature at one or more locations on the machining equipment 105. The outputs from each of the sensor are henceforth collectively referred to as sensor data.

The controller 115 comprises a trans-receiver 130, one or more processors 135 and a memory 140. The trans-receiver 130 is configured to connect the controller 115 to a network interface 145 associated with the network 120. The controller 115 transmits real-time operational data to the apparatus 110 in through the network interface 145. The real-time operational data includes the operating conditions set on the controller 115 and sensor data received from the one or more sensing units 125.

The apparatus 110 may be a (personal) computer, a workstation, a virtual machine running on host hardware, a microcontroller, or an integrated circuit. As an alternative, the apparatus 110 may be a real or a virtual group of computers (the technical term for a real group of computers is "cluster", the technical term for a virtual group of computers is "cloud").

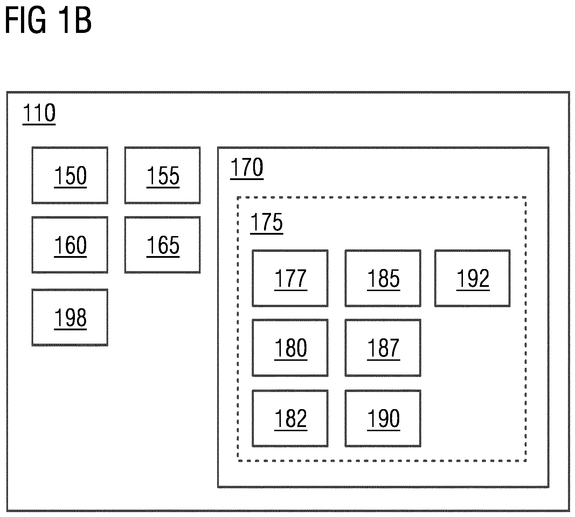

The apparatus 110 includes a communication unit 150, one or more processing units 155, a display 160, a user interface 165 and a memory unit 170 communicatively coupled to each other as shown in FIG 1B. In one embodiment, the communication unit 150 includes a transmitter (not shown), a receiver (not shown) and Gigabit Ethernet port (not shown). The memory unit 170 may include 2 Giga byte Random Access Memory (RAM) Package on Package (PoP) stacked and Flash Storage. The one or more processing units 155 are configured to execute the defined computer program instructions in the modules. Further, the one or more processing units 155 are also configured to execute the instructions in the memory unit 170 simultaneously. The display 160 includes a High-Definition Multimedia Interface (HDMI) display and a cooling fan (not shown). Additionally, control personnel may access the apparatus 110 through the user interface 165. In an embodiment, the user interface 165 may be associated with a remote device communicatively coupled to the apparatus 110. For example, the remote device may provide access to the apparatus via a web-based interface, a web-based downloadable application interface, and so on.

The term `processing unit' as used herein, means any type of computational circuit, such as, but not limited to, a microprocessor, microcontroller, complex instruction set computing microprocessor, reduced instruction set computing microprocessor, very long instruction word microprocessor, explicitly parallel instruction computing microprocessor, graphics processor, digital signal processor, or any other type of processing circuit. The processing unit 155 may also include embedded controllers, such as generic or programmable logic devices or arrays, application specific integrated circuits, single-chip computers, and the like. In general, the processing unit 155 may comprise hardware elements and software elements. The processing unit 155 can be configured for multithreading, i.e., the processing unit 155 may host different calculation processes at the same time, executing the either in parallel or switching between active and passive calculation processes.

The memory unit 170 may be volatile memory and non-volatile memory. The memory unit 170 may be coupled for communication with the processing unit 155. The processing unit 155 may execute instructions and/or code stored in the memory unit 170. A variety of computer-readable storage media may be stored in and accessed from the memory unit 170. The memory unit 170 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

The memory unit 170 further comprises a virtual orchestration module 175 in the form of machine-readable instructions on any of the above-mentioned storage media and may be in communication to and executed by the processing unit 155. The virtual orchestration module 175 further comprises a request processing module 177, a virtual replica selection module 180, a digital replica configuration 182, a simulation module 185, an action module 187, a notification module 190 and a secure wallet module 192.

The apparatus 110 may further comprise a storage unit 198. The storage unit 198 may include a database comprising a digital library. The digital library comprises data corresponding to a plurality of virtual replicas associated with one or more types of spindle bearing assemblies suitable for the machining equipment 105 or one or more other machining equipment similar to the machining equipment 105. The following description explains functions of the modules when executed by the processing unit 155.

The request processing module 177 is configured for receiving a request from the user interface, for performing virtual orchestration of the machining equipment 105. The term `virtual orchestration' as used herein refers to at least one of testing, verification, and validation, for enabling management and use of the machining equipment 105, by using a digital replica of at least the spindle bearing assembly suitable for the machining equipment 105.

The request comprises one or more input data indicative of a type of the virtual orchestration, and information relevant for performing the virtual orchestration. The virtual replica selection module 180 is configured for selecting at least one virtual replica, from a plurality of virtual replicas stored in a digital library within a virtual layer, upon receiving the request. The term `virtual layer' as used herein refers to a logical abstraction of physical resources, such as compute, network, and storage that enables a single hardware resource to support multiple concurrent instances of the apparatus 110 or multiple hardware resources to support single instance of the apparatus 110. Herein, concurrent instances of the apparatus 110 refer to multiple occurrences of the same apparatus 110 running simultaneously, often on different machines or threads. Each concurrent instance of the apparatus 110 operates independently of the others and may perform tasks simultaneously. This allows for multiple users or operators of the machining equipment 105 to access the apparatus 110 at the same time and perform the virtual orchestration simultaneously without interfering with each other's tasks.

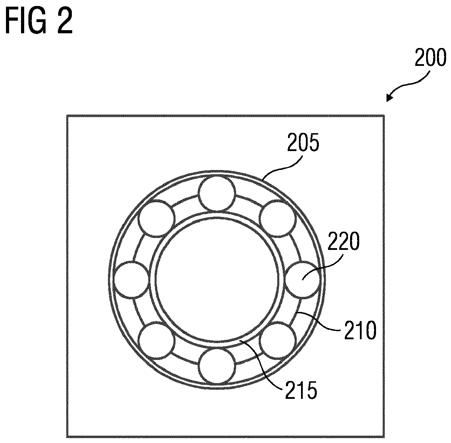

Herein, each of the virtual replicas correspond to a static mathematical representation of a spindle bearing assembly (shown in FIG 2) suitable for the machining equipment 105. The digital replica configuration module 182 configures a digital replica of at least the spindle bearing assembly suitable for the machining equipment 105 within the virtual layer, by updating the selected virtual replica using the input data. Herein, the digital replica is a dynamic mathematical representation of at least the spindle bearing assembly corresponding to the selected virtual replica. The digital replica configuration module 182 calibrates the digital replica to replicate substantially similar responses of the spindle bearing assembly. In other words, the digital replica is calibrated to ensure a certain degree of fidelity with the spindle bearing assembly.

The simulation module 185 is configured for computing one or more workflow parameters associated with the spindle bearing assembly based on execution of at least one simulation using the configured digital replica. The action module 187 is configured for performing at least one action based on the one or more workflow parameters to generate an outcome. The notification module 190 is configured for generating notifications associated with an outcome of performing the at least one action on the display 160.

The secure wallet module 192 is configured for identifying a secure wallet template based on the outcome of the at least one action for virtual orchestration of the machining equipment 105. Herein, the term `outcome of the at least one action, may include at least one of a deterministic value and probabilistic value indicative of an operational attribute of the spindle bearing assembly. Non-limiting examples of operational attributes include, optimal operating conditions, energy-efficient operating conditions, optimal configuration, predicted machining time, availability, performance, uptime etc. Further, the secure wallet module 192 further configures a secure wallet based on the selected secure wallet template using the one or more workflow parameters, wherein the secure wallet is a piece of code executable on a decentralized network (not shown) for controlling a financial transaction between a consumer and an Original Equipment Manufacturer of the machining equipment 105.

Those of ordinary skilled in the art will appreciate that the hardware depicted in FIGS 1A and 1B may vary for different implementations. For example, other peripheral devices such as an optical disk drive and the like, Local Area Network (LAN)/ Wide Area Network (WAN)/ Wireless (e.g., Wi-Fi) adapter, graphics adapter, disk controller, input/output (I/O) adapter, network connectivity devices also may be used in addition or in place of the hardware depicted. The depicted example is provided for the purpose of explanation only and is not meant to imply architectural limitations with respect to the present disclosure.

In the present embodiment, the machining equipment 105 is considered to a CNC lathe, for ease of explanation. The CNC lathe is a three-axis machine comprising the spindle attached to a tool holder. The tool holder holds cutting tools required for machining a workpiece. The spindle is supported by an Angular Contact Ball Bearing (ACBB) assembly mounted on a shaft of the spindle.

FIG 2 illustrates an ACBB assembly 200 of a spindle associated with a machining equipment 105, in accordance with an embodiment of the present invention. The ACBB assembly 200, henceforth called the spindle bearing assembly 200, comprises a housing 205 that houses an outer race 210, an inner race 215, and a plurality of balls 220 of uniform size disposed between the outer race 210 and the inner race 215.

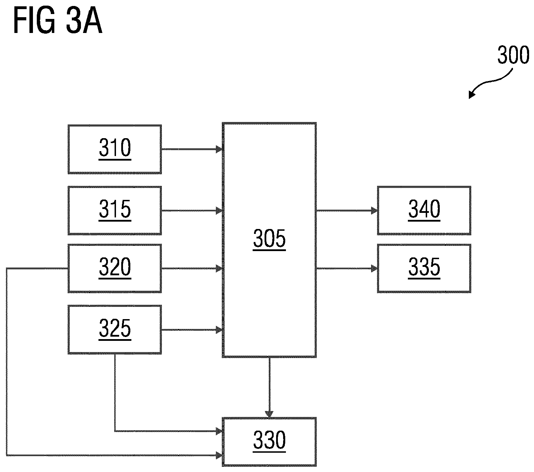

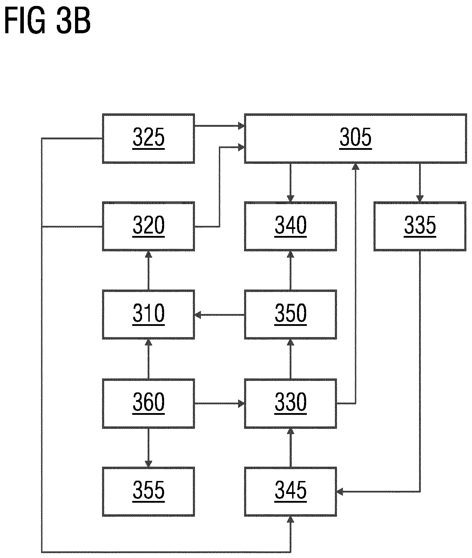

FIGS 3A & 3B illustrate a digital replica 300 associated with the spindle bearing assembly 200, in accordance with an embodiment of the present invention. Herein, the digital replica 300 is based on a virtual replica comprising a one-dimensional (1D) dynamic model 305 of the spindle bearing assembly 200.

The 1D dynamic model 305 is built using a 1D simulation software that uses codes and equations of motions to solve mathematical problems. In particular, the 1D dynamic model 305 is a 5 Degree of Freedom (DOF) model of the spindle bearing assembly 200. The 5 DOF model include 2 planar DOFs of inner race 215, 2 planar DOFs for the outer race 210, and 1 planar DOF for the housing 205. Further, inputs to the 1D dynamic model 305 comprises product specifications such as geometric parameters 310 (such as mass, diameter etc., joint stiffnesses, damping values), material properties 315, applied preload 320, radial load and operating speed associated with the spindle bearing assembly 200. A further input to the 1D dynamic model 305 comprises contact forces 330 between each of the balls 220 and the inner race 215 of the spindle bearing assembly 200. The outputs from the 1D dynamic model 305 comprises performance metrics of the spindle bearing assembly 200 such as component displacements 335, velocities and acceleration plots 340 of the housing 205, the outer race 210, and the inner race 215.

The virtual replica further comprises a 1D thermal model 350 of the spindle bearing assembly 200. The 1D dynamic model and the 1D thermal model are operably coupled as shown in FIG 3B to form an integrated dynamic-thermal model. In an example, the integrated dynamic-thermal model may provide a mathematical relationship between dynamic and thermal nature of the spindle bearing assembly. The inputs to the 1D thermal model 350 comprise contact forces 330 computed by a motion simulation model 345. The output from the 1D thermal model 350 includes the heat generated in the spindle bearing assembly 200 or a bearing temperature 360. Herein, the term `bearing temperature' may refer to a temperature of the outer race 210 and/or the inner race 215. The bearing temperature 360 is further used to calibrate values of lubrication parameters 355 and material properties or geometric parameters 310 of the spindle bearing assembly 310, using predetermined mathematical equations. Based on the calibrated material properties or geometric parameters 310, an induced thermal preload may be computed. The induced thermal preload is further used to calibrate the applied preload 320.

The motion simulation model 345, operably coupled to the integrated dynamic-thermal model as shown in FIG 3B, is configured to dynamically compute the contact forces 330 in the spindle bearing assembly 200. The motion simulation model 345 computes the contact forces 330 based on the applied preload 320, the radial load and the operating speed 325 of the shaft on which the spindle bearing assembly 200 is mounted. In an implementation, the motion simulation model 345 comprises empirical equations that may be solved using a 1D simulation software. In another implementation, the motion simulation model 345 comprises a 3D motion simulation model built using a three-dimensional (3D) CAD software. In the 3D motion simulation model, 3D contacts are defined between the balls 220 and, the inner race 215 and the outer race 210, based on stiffness and damping values computed using Hertzian contact theory. The inputs to the 3D motion simulation model includes bearing component displacements 335, the applied preload 320, the radial load and the operating speed 325 of the shaft.

In an embodiment, the integrated dynamic-thermal model is cosimulated with the 3D motion simulation model 345 as shown in FIG 3B. Herein, the 1D simulation software acts as a master program and the 3D CAD software acts as a slave program. The 1D simulation software further generates main outputs such as component displacements 335, velocities and acceleration plots 340, heat generated in the bearing, bearing temperature 360, induced thermal preload, lubrication parameters 355 etc.

Advantageously, the 3D CAD software allows modeling of faults, defects and wears in the spindle bearing assembly 200 for precise calculation of the contact forces 330, which is otherwise not possible using only 1D simulation software. For example, a fault in the spindle bearing assembly 200 may be modelled as a localized rectangular depression in the inner race 215 or the outer race 210, in the 3D motion simulation model 345. Further, the 3D motion simulation model 345 may also be converted to a finite element mesh to identify contact stresses at the fault. In particular, the workflow parameters required for estimating a realistic state of the spindle bearing assembly 200 includes the velocities and acceleration plots 340, the calibrated preload 320, the contact forces 330 and the bearing temperature 360.

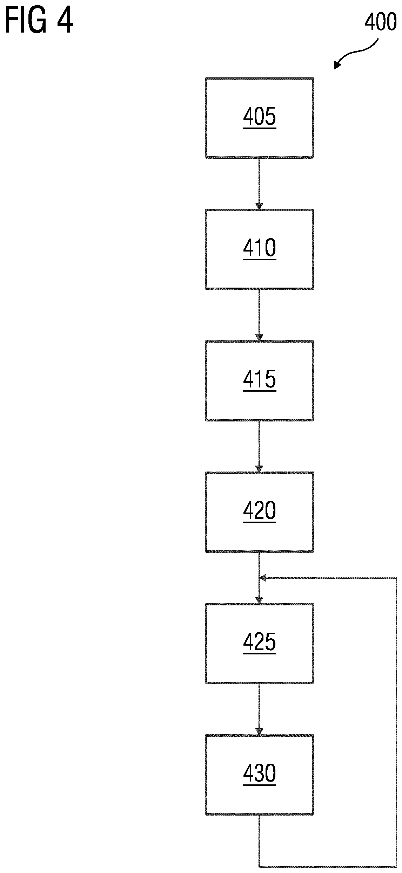

FIG 4 depicts a flowchart of an exemplary method 400 for virtual orchestration for managing and using the machining equipment 105, in accordance with an embodiment of the present invention.

At step 405, a request for performing virtual orchestration of the machining equipment 105, by the processing unit 155, is received from the user interface 165. The request comprises input data indicative of one or more requirements associated with the virtual orchestration. For example, the input data may include a type of virtual commissioning to be performed, and information relevant for performing the virtual orchestration. The type of virtual commissioning may be for example, one of virtual testing and virtual designing of a spindle bearing assembly associated with the machining equipment 105. Further, the virtual testing may be associated with identifying an optimal configuration for spindle bearing assembly of the machining equipment 105, with identifying optimal operating conditions for the bearing assembly, predicting machining time for the test inputs etc.

The input data may include, for example, initial values for operating conditions, a configuration of the bearing assembly an expected production time, an expected energy efficiency, operational data etc. for predicting a behavior of the bearing assembly in a hypothetical scenario. The operational data may be obtained from, for example, real-time or historic data associated with the machining equipment 105 or another similar machining equipment, simulated operational data or manually entered by a human operator. In a further embodiment, the apparatus 110 may be further configured to acquire real-time operational data from, for example, the sensing units 125, the controller 115 etc. associated with the machining equipment 105 or another similar machining equipment. For example, the operational data may be associated with acceleration, thermal profile, operating shaft speed, NC program etc.

In an embodiment, a user interface of the apparatus 110 may be dynamically configured for receiving the request from the human operator based on a type of virtual orchestration selected by the human operator from a set of virtual orchestration options. For example, if the human operator chooses virtual testing for determining optimal operating conditions of the bearing assembly, the user interface may be dynamically configured to receive input data such as initial values of the operating conditions.

At step 410, at least one virtual replica is selected, from a plurality of virtual replicas stored in a digital library within a virtual layer, upon receiving the request. Each of the virtual replicas correspond to a static mathematical representation of a spindle bearing assembly suitable for the machining equipment 105. In the present embodiment, the virtual replica comprises an integrated dynamic-thermal model as shown in FIG 3B. In an embodiment, each of the plurality of virtual replicas correspond to different types of spindle bearing assemblies suitable for the machining equipment 105. For example, the different types of spindle bearing assemblies may include angular contact ball bearing, deep groove ball bearing, self-aligning ball bearing etc.

In an embodiment, selecting the at least one virtual replica from the plurality of virtual replicas stored in the digital library, includes identifying metadata indicative of the one or more requirements for performing the virtual orchestration within the virtual layer, from the input data. For example, the metadata may be indicative of the type of virtual orchestration to be performed. Further, the metadata may indicate that the spindle bearing assembly is an angular contact ball bearing and the type of virtual orchestration may correspond to determining an optimal configuration of the spindle bearing assembly.

Further, a search logic is generated based on the identified metadata. For example, the search logic may be generated by embedding the metadata into a predefined search string. In an example, the search logic may be an updated search string. In another example, the search logic may be a sequence of selections within different categories of virtual replicas. Further, a search is performed in the digital library comprising the plurality of virtual replicas, based on the generated search logic, for selecting the virtual replica. Upon performing the search, a model file comprising model data associated with the selected virtual replica is retrieved. For example, the model file may be in formats such as XML, STL, OBJ, FBX, and DAE.

In a preferred embodiment, the digital library may be stored on a cloud platform. Further, a reduced order model of the selected virtual replica may be deployed on the apparatus 110, upon selection based on the search logic, for enabling faster on-premises simulations.

At step 415, a digital replica of at least the spindle bearing assembly suitable for the machining equipment 105 is configured within the virtual layer, by updating the selected virtual replica based on the input data. The digital replica is a dynamic mathematical representation of at least the spindle bearing assembly corresponding to the selected virtual replica. In an embodiment, updating the digital replica comprises updating the selected virtual replica based on the input data, (for e.g., simulated or real-time operational data) to generate one or more simulation instances. In the present example, the operational data is provided as inputs to the integrated dynamic-thermal model (i.e., the digital replica) to generate the one or more simulation instances corresponding to the spindle bearing assembly.

At step 420, one or more workflow parameters associated with the spindle bearing assembly are computed based on execution of at least one simulation using the configured digital replica. In an embodiment, computing the one or more workflow parameters based on execution of the at least one simulation includes executing the one or more simulation instances of the configured digital replica in a simulation environment to generate one or more simulation results indicative of the one or more workflow parameters. For example, referring to FIG 3B, vibration response and temperature response at one or more locations on the spindle bearing assembly may be virtually sensed by defining `virtual sensors' at the respective locations on the 3D motion simulation model of the spindle bearing assembly. The one or more locations where virtual sensors are defined may be spatial positions on the spindle bearing assembly where direct measurement of parameters using sensors is not possible. The outputs of such virtual sensors constitute the workflow parameters. In the case of the spindle bearing assembly, the workflow parameters may include, for example, parameters such as vibrations, stiffness, preload, contact forces, temperatures and stresses at one or more locations on the spindle bearing assembly.

At step 425, at least one action is performed based on the one or more workflow parameters to generate an outcome. The at least one action is determined based on the one or more requirements indicated by the input data.

In an embodiment, the outcome of performing the at least one action is identification of the optimal configuration of the spindle bearing assembly. In the present embodiment, performing the at least one action based on the one or more workflow parameters includes determining whether the one or more workflow parameters meet a predetermined criterion. For example, the workflow parameter may be temperature at a location inside the housing of the spindle bearing assembly. Here, the predefined criterion may include a maximum allowable temperature for a given spindle bearing assembly. If the computed temperature (workflow parameter) is greater than the maximum allowable temperature, it damages the spindle bearing assembly. Therefore, it may be necessary to choose a spindle bearing assembly that may withstand the computed temperature. Alternatively, it may also be necessary to choose a spindle bearing assembly that generates less heat. In other words, it is necessary to identify configuration of the spindle bearing assembly most suited for the machining equipment 105. In an embodiment, if the one or more workflow parameters fail to meet the predefined criterion, then the spindle bearing assembly, one or more other virtual replicas are selected from the digital library. Further, steps 415 to 425 are repeated each of the one or more other virtual replicas until the predefined criterion is met. In other words, multiple virtual replicas are used to compute the one or more workflow parameters based on the input data until the predefined criterion is met.

Alternatively, if the one or more workflow parameters meet the predefined criterion, a configuration of the spindle bearing assembly corresponding to the selected virtual replica is identified from the selected virtual replica. For example, model data corresponding to the virtual replica may indicate the configuration as an angular contact ball bearing. The configuration thus identified represents the optimal configuration of the spindle bearing assembly.

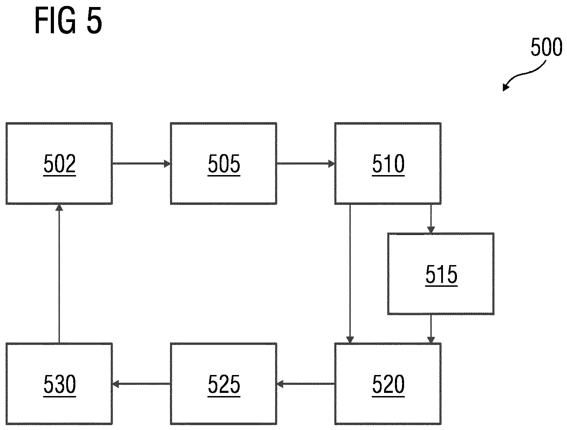

In another embodiment, the one or more requirements may be associated with determining optimal operating conditions for the spindle bearing assembly. In this case, the outcome of performing the at least one action is an optimal operating condition for the spindle bearing assembly. The optimal operating condition is associated with one of autonomous operation and manual operation of the machining equipment 105. The optimal operating condition may be indicated by a set of operational parameters and/or control parameters to be used for operation of the machining equipment 105. In this embodiment, performing the at least one action based on the one or more workflow parameters includes performing the at least one action based on the one or more workflow parameters comprises using an optimization algorithm to compute the optimal operating condition for the spindle bearing assembly based on the one or more workflow parameters. FIG 5 illustrates an exemplary method of computing and maintaining optimal operating condition for the spindle bearing assembly, in accordance with an embodiment of the present invention.

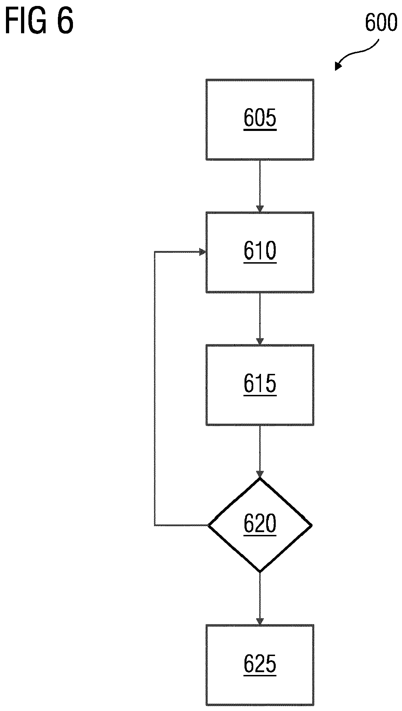

In yet another embodiment, the outcome of performing the one or more actions include a control parameter for controlling an operation of the machining equipment 105. In the present embodiment, performing the at least one action includes computing the deviation between at least one of the workflow parameters and a corresponding measured parameter. In an example, the machining equipment 105 is in use and the measured parameter is measured using the one or more sensing units 125. In another example, the measured parameter may be manually measured by a human operator. Further, the measured parameter may be provided to the apparatus 110 as part of the input data. In an embodiment, the measured parameter is an actual production time associated with the machining equipment 105 or another machining equipment similar to the machining equipment 105, and the workflow parameter is a production time predicted based on simulations performed using the digital replica of at least the spindle bearing assembly. In an example, the term 'deviation' may refer to a standard deviation between a mean value of the measured parameter and the workflow parameter. Further, if the computed deviation is greater than a predefined value, the control parameter is calculated based on the computed deviation. The calculated control parameter is adapted to reduce the deviation between the at least one workflow parameter and the measured parameter when applied to the machining equipment 105. In an embodiment, the deviation is associated with a production time of the machining equipment 105. More specifically, the deviation may be computed based on a machining time predicted based on the simulations performed at step 420, and a measured machining time. An example of a workflow for predicting the production time for a machining equipment is shown in FIG 6.

At step 430, a secure wallet configured based on the outcome of performing the at least one action is executed. The secure wallet is a piece of code executable on the decentralized network for controlling a transaction between a consumer node and a manufacturer node, wherein the consumer node is a node associated with a consumer of the machining equipment 105, and wherein the manufacturer node is a node associated with a manufacturer of the machining equipment 105. The term `node' as used herein refers to a processing device such as a computer that participates in the decentralized network, configured to run a protocol software for validating transactions on the decentralized network. In an embodiment, executing the secure wallet includes, firstly, identifying a secure wallet template based the one or more requirements indicated by the input data. In an example, a first secure wallet template may be associated with the category of determining optimal configuration for the spindle bearing assembly. The corresponding secure wallet, when executed, may initiate a financial transaction between the manufacturing node and the consumer node for making a payment to the manufacturer for availing the optimal configuration of the spindle bearing assembly for the machining equipment 105. The payment may be based on for example, a pay-peruse basis thereby enabling the manufacturer to provide the machining equipment 105 as a service to the consumer.

In another example, a second secure wallet template may be associated with the category of determining deviation between a workflow parameter and a measured parameter. Further, based on the nature of the parameter and a predetermined cause of the deviation, the secure wallet is executed to enable the manufacturer (or consumer) to penalize or reward the consumer (or manufacturer) for the deviation. In an embodiment, the cause of the deviation may be determined based on a predefined algorithm, for example, based on root cause analysis. For example, if the workflow parameter is availability, and if the actual availability of the machining equipment 105 when in use by the consumer is lesser than the predicted availability, the consumer may be penalized if the cause of low availability is attributed to poor use of the machining equipment by the consumer. Alternatively, if the cause of the low availability is attributed to a manufacturing defect, then the manufacturer may be penalized.

In an example, the decentralized network may be a private blockchain associated with a financial service provider that enables quantification of operational expenditure associated with the machining equipment 105 using the secure wallet executed based on the outcome of the at least one action. In an embodiment, the secure wallet may be updated by modifying codes in the secure wallet, based on the outcome of the at least one action performed. For example, the workflow parameters computed may be indicative of performance or availability associated with the machining equipment 105 predicted for a period of lease, say 20 years.

In another embodiment, the method 400 further comprises generating a notification indicating the outcome of performing the at least one action on the user interface 160. For example, the user interface 160 may display values of the workflow parameters in different formats including, but not limited to, text, graphics, augmented reality, virtual reality etc.

FIG 5 shows a flowchart of an exemplary workflow 500 of computing and maintaining optimal operating conditions for a spindle bearing assembly associated with a machining equipment, in accordance with an embodiment of the present invention.

At step 505, a digital replica 502 of the spindle bearing assembly is used to simulate a behavior of the spindle bearing assembly for a given set of input data. Based on the simulation, workflow parameters such as vibrations, temperature, stiffness, preload, contact forces and stresses associated with the spindle bearing assembly are predicted, for example, in the form of time-series data.

At step 510, the workflow parameters are preprocessed. The preprocessing may include conversion of the workflow parameters in time-series format to frequency spectrums. For example, feature extraction and feature selection may be performed over the workflow parameters in frequency-domain format. Feature extraction may be performed using statistical analysis methods such as, but not limited to, mean, standard deviation, Root Mean Square, skewness, kurtosis, maximum, minimum, and crest factor. Feature selection may be performed using neural network-based techniques such as, but not limited to, modified distance discriminant technique, distance evaluation technique, and discrete wavelet. It must be understood that feature selection is employed to preprocess the data to improve accuracy of response prediction in step 515. Herein, the term 'response' may indicate at least one statistical parameter indicative of vibration, temperature or remaining useful life of one or more bearing assemblies of the spindle bearing assembly.

At step 515, the response associated with the spindle bearing assembly is predicted based on the preprocessed data obtained at step 510 using an Artificial Intelligence-based technique such as Support Vector Machines. In an alternate embodiment, other techniques based on Fuzzy logic may also be used for predicting the response. In a preferred embodiment, an optimization algorithm based on combination of Artificial Intelligence techniques and fuzzy logic is used to predict the response with a desired level of accuracy. For example, vibration data in frequency domain (i.e., vibration spectrum) may be processed using a neuro-fuzzy logic to predict the response of the spindle bearing assembly. Upon optimization, a set of workflow parameters associated with the spindle bearing assembly is generated. The workflow parameters include values of vibration, temperature, preload, stiffness etc. that are indicative of a characteristic response of the spindle bearing assembly, at one or more locations or points of interest.

At step 520, the workflow parameters are analyzed to identify an optimal operating condition of the spindle bearing assembly, using machine learning and artificial intelligence-based search methods based on, for example, gradient descent, genetic algorithm, particle swarm optimization etc. The optimal operating condition may include specific values of load, speed, preload etc. In an embodiment, the optimal operating condition is associated with an autonomous or unmanned operation of the machining equipment. In another embodiment, the optimal operating condition is associated with manual operation of the machining equipment.

At step 525, the optimal operating condition of the spindle bearing assembly is further provided as input to a controller associated with the machining equipment. The controller further computes control parameters corresponding to the optimal operating condition. The computed control parameters are further used to generate control commands for the machining equipment. Upon implementing the control commands, operating condition of the spindle bearing assembly is modified to match the optimal operating condition computed at step 530.

At step 530, operational parameters of the machining equipment, upon implementing the control commands, are further used as feedback to reconfigure the digital replica 502. Further steps 505 to 530 are repeated to ensure that the spindle bearing assembly continues to operate under optimal operating conditions.

FIG 6 shows a flowchart of an exemplary method 600 for predicting production time associated with a machining equipment, in accordance with an embodiment of the present invention.

At step 605, a request for computing production time associated with a machining equipment is received. The request comprises input data indicative of requirements such as load, workpiece-related information, a type of spindle bearing assembly etc.

At step 610, a virtual replica corresponding to a spindle bearing assembly of the machining equipment is selected from a digital library. The virtual replica may be an integrated dynamic-thermal model as explained earlier with reference to FIGS 3A & 3B. Further, the virtual replica is updated based on the input data to configure a digital replica of the spindle bearing assembly.

At step 615, the digital replica is executed in a simulation environment used to execute a simulation, in a simulation environment. Upon executing the simulation, simulation results indicative of changes in temperature, applied preload and stiffness relative to at least one location on the spindle bearing assembly are generated. Further, a machining time of the machining equipment is computed based on the simulation results, for example, using predetermined mathematical models.

At step 620, the computed machining time is compared with a measured machining time corresponding to the machining equipment, to determine a deviation. The measured machining time represents an actual machining time measured by an operator when the same set of requirements are applied to the actual machining equipment. If the determined deviation is greater than a predefined value, the virtual replica is recalibrated based on the deviation, and steps 610 to 620 are repeated. The recalibrated virtual replica may be further updated in the digital library. If the deviation is less than a predefined value, then step 625 is performed.

At step 625, the computed machining time is used to calculate a production time of the machining equipment.

Advantageously, the present invention enables manufacturer of machining equipment to provide the machining equipment-as-a-service to potential consumers, thereby eliminating the need for purchasing of the machining equipment by the consumer by paying a price upfront. More specifically, the present enables virtual orchestration of a machining equipment for predicting attributes (outcomes) associated with the machining equipment, and thereby enables quantification of an operational expenditure associated with the machining equipment with the help of the secure wallets. Further, the use of secure wallets enables automatic penalizing or rewarding of consumer or manufacturer based on performance of the machining equipment, depending on factors affecting such performance. The use of digital replicas helps in accurate modeling of a real-time condition of the spindle bearing assembly for performing the simulation, in place of simulation models that rely on idealistic conditions. Consequently, error associated with prediction of performance metrics associated with the spindle bearing assembly is minimized. Furthermore, the present invention enables consumers to perform virtual orchestration of a machining equipment, without requiring physical access to the machining equipment. More specifically, the present invention enables consumers to make quick decisions on selection of a machining equipment or one or more components thereof suitable for a particular application without the need for physical tests. In addition, the consumer may also perform virtual orchestration of the machining equipment to predict operational behavior of the machining equipment to determine conditions for optimal operation in any given scenario.

The present invention is not limited to a particular computer system platform, processing unit, operating system, or network. One or more aspects of the present invention may be distributed among one or more computer systems, for example, servers configured to provide one or more services to one or more client computers, or to perform a complete task in a distributed system. For example, one or more aspects of the present invention may be performed on a client-server system that comprises components distributed among one or more server systems that perform multiple functions according to various embodiments. These components comprise, for example, executable, intermediate, or interpreted code, which communicate over a network using a communication protocol. The present invention is not limited to be executable on any particular system or group of system, and is not limited to any particular distributed architecture, network, or communication protocol.

While the invention has been illustrated and described in detail with the help of a preferred embodiment, the invention is not limited to the disclosed examples. Other variations can be deducted by those skilled in the art without leaving the scope of protection of the claimed invention.

### List of reference signs

- 100: system for performing virtual orchestration for managing and using at least one machining equipment
- 105: machining equipment
- 110: apparatus
- 115: controller
- 120: network
- 125: one or more sensing units
- 130: trans-receiver
- 135: one or more processors of the controller 115
- 140: memory of the controller 115
- 145: network interface
- 150: communication unit
- 155: one or more processing units of the apparatus 110
- 160: display
- 165: user interface
- 170: memory unit
- 175: virtual orchestration module
- 177: request processing module
- 180: virtual replica selection module
- 182: digital replica configuration
- 185: simulation module
- 187: action module
- 190: notification module
- 192: secure wallet module
- 198: storage unit
- 200: ACBB assembly
- 205: housing
- 210: outer race
- 215: inner race
- 220: plurality of balls

## Claims

1. A computer-implemented method comprising:
a) receiving, by a processing unit (155), a request for performing virtual orchestration of a machining equipment (105), from a user interface (165), wherein the request comprises input data indicative of one or more requirements associated with the virtual operating of machinery equipment;
b) selecting at least one virtual replica, from a plurality of virtual replicas stored in a digital library within a virtual layer, upon receiving the request, wherein each of the virtual replicas correspond to a static mathematical representation of a spindle bearing assembly suitable for the machining equipment (105);
c) configuring a digital replica of at least the spindle bearing assembly suitable for the machining equipment (105) within the virtual layer by updating the selected virtual replica based on the input data, wherein the digital replica is a dynamic mathematical representation of at least the spindle bearing assembly corresponding to the selected virtual replica;
d) computing one or more workflow parameters associated with the spindle bearing assembly based on execution of at least one simulation using the configured digital replica;
e) performing at least one action based on the one or more workflow parameters to generate an outcome; and
f) generating a notification indicative of the outcome of performing the at least one action on a user interface (165) .

2. The method according to claim 1, further comprising:
executing a secure wallet adapted based on the outcome of performing the at least one action, wherein the secure wallet is a piece of code executable on a decentralized network for controlling a transaction between a consumer node and a manufacturer node, wherein the consumer node is a node associated with a consumer of the machining equipment (105), and wherein the manufacturer node is a node associated with a manufacturer of the machining equipment (105) .

3. The method according to claim 1, wherein selecting the at least one virtual replica from the plurality of virtual replicas stored in the digital library, comprises:
identifying, from the input data, metadata indicative of the one or more requirements for performing the virtual orchestration within the virtual layer;
generating a search logic based on the metadata identified; and
performing a search in the digital library comprising the plurality of virtual replicas, based on the generated search logic, for selecting the virtual replica.

4. The method according to claim 1, wherein the virtual replica comprises an integrated dynamic-thermal model, comprising at least a one-dimensional dynamic model operably coupled to a one-dimensional thermal model of the spindle bearing assembly.

5. The method according to claim 4, wherein the virtual replica further comprises a motion simulation model operably coupled to the integrated dynamic-thermal model, wherein the at least one motion simulation model is configured for dynamically computing contact forces in the spindle bearing assembly.

6. The method according to any of the preceding claims, wherein computing the one or more workflow parameters associated with the spindle bearing assembly based on execution of the at least one simulation using the configured digital replica, comprises:
executing one or more simulation instances of the configured digital replica in a simulation environment to generate one or more simulation results indicative of the one or more workflow parameters.

7. The method according to any of the preceding claims, wherein the outcome of performing the at least one action is an optimal configuration for the spindle bearing assembly, wherein performing the at least one action based on the one or more workflow parameters comprises:
determining whether the one or more workflow parameters meet a predetermined criterion;
if at least one of the workflow parameters fail to meet the predetermined criterion:
selecting one or more other virtual replicas from the digital library; and
repeating steps (c) through (e) of claim 1, for each of the one or more other virtual replicas until the one or more workflow parameters meet the predetermined criterion.

8. The method according to claims 1 and 7, further comprising: if the one or more workflow parameters meet the predetermined criterion:
identifying a configuration of the spindle bearing assembly corresponding to the selected virtual replica, wherein the identified configuration represents the optimal configuration of the spindle bearing assembly.

9. The method according to any of the preceding claims, wherein the outcome of performing the at least one action is an optimal operating condition for the spindle bearing assembly, wherein the optimal operating condition is associated with one of autonomous operation and manual operation of the machining equipment (105), and wherein performing the at least one action based on the one or more workflow parameters, comprises:
using an optimization algorithm to compute the optimal operating condition for the spindle bearing assembly based on the one or more workflow parameters.

10. The method according to any of the preceding claims, wherein the outcome of performing the at least one action is deviation between at least one of the workflow parameters and a corresponding measured parameter, and wherein performing the at least one action based on the one or more workflow parameters, comprises:
computing the deviation between the at least one of the workflow parameters and the corresponding measured parameter.

11. The method according to claims 1 and 10, wherein the outcome of performing the at least one action is a control parameter for controlling an operation of the machining equipment (105), and wherein performing the at least one action based on the one or more workflow parameters comprises:
if the deviation is greater than a predefined value:
calculating the control parameter based on the computed deviation, wherein the calculated control parameter is adapted to reduce the deviation between the at least one workflow parameter and the measured parameter when applied to the machining equipment (105).

12. The method according to claim 10 or 11, wherein the deviation is associated with a production time of the machining equipment (105).

13. The method according to claims 1 and 2, wherein executing the secure wallet adapted based on the outcome of performing the at least one action, further comprises:
identifying a secure wallet template based on the one or more requirements received with the request; and
configuring the secure wallet using the selected secure wallet template based on the outcome of performing the at least one action for virtual orchestration of the machining equipment (105).

14. An apparatus (110) comprising:
one or more processing units (155); and
a memory unit (170) communicatively coupled to the one or more processing units (155), wherein the memory unit (170) comprises a virtual orchestration module (175) stored in the form of machine-readable instructions executable by the one or more processing units (155), wherein the virtual orchestration module (175) is configured to perform method steps for performing virtual orchestration for managing and using the machining equipment (105), according to any of the claims 1 to 13.

15. A computer-program product having machine-readable instructions stored therein, which when executed by one or more processing units, cause the processing units to perform a method according to any of the claims 1 to 13.
